# EUROPÄISCHE PATENTSCHRIFT

(11) **EP 0 378 617 B1**
(45) Veröffentlichungstag und Bekanntmachung des Hinweises auf die Patenterteilung: **08.09.1993**
(21) Anmeldenummer: 89906670.8
(22) Anmeldetag: 06.06.1989
(51) Int. Cl.: B21F 27/10, B23K 11/00

(54) **NACH DER ELEKTRISCHEN WIDERSTANDSMETHODE ARBEITENDE GITTERSCHWEISSMASCHINE**
GRID WELDING MACHINE OPERATING ON THE ELECTRICAL RESISTANCE PRINCIPLE
SOUDEUSE DE GRILLES FONCTIONNANT SELON LE PRINCIPE DE LA RESISTANCE ELECTRIQUE

(30) Priorität: 08.06.1988 AT 1491/88
(43) Veröffentlichungstag der Anmeldung: 25.07.1990
(73) Patentinhaber: EVG Entwicklungs- u. Verwertungs- Gesellschaft m.b.H., A-8042 Raaba (AT)
(72) Erfinder: RITTER, Gerhard, A-8043 Graz (AT); RITTER, Klaus, A-8042 Graz (AT); JURSCHE, Kurt, A-8010 Graz (AT); SCHERR, Rudolf, A-8045 Graz (AT)
(74) Vertreter: Holzer, Walter, Dipl.-Ing.
(86) Internationale Anmeldenummer: AT8900055
(87) Internationale Veröffentlichungsnummer: WO8911933

(56) Entgegenhaltungen:
- FR-A- 2 246 350
- FR-A- 2 351 729
- US-A- 3 162 744
- US-A- 3 206 586

## Beschreibung

Die Erfindung betrifft eine nach der elektrischen Widerstandsmethode arbeitende Gitterschweißmaschine mit einer horizontalen Zuführungsbann für eine Schar paralleler Längsdrähte und oberhalb sowie unterhalb derselben angeordneten Querdrahtzubringern, welche anzuschweißende Querdrähte orthogonal zu den Längsdrähten in die Schweißlagen zwischen der Längsdrahtschar und beiderseits derselben angeordneten Reihen von aktiven Schweißelektroden bringen.

Gitterschweißmaschinen dieser Gattung sind bereits für verschiedene Verwendungszwecke bekannt, beispielsweise zu dem Zweck, Querdrähte in der gewünschten Länge von Gittermatten entsprechenden Abschnitten der Längsdrahtschar abwechselnd oberhalb und unterhalb der Längsdrahtschar anschweißen zu können, so daß es möglich ist, die ablängten Matten ohne Wenden um 90° durch Eingreifen der Querdrähte jeweils einer Matte in Querdrahtlücken der Nachbarmatten raumsparend zu stapeln (vgl. z.B. AT-PS 215.268). In einem anderen Anwendungsfall werden die oberhalb und unterhalb der Längsdrahtschar zugeführten Querdrähte derart selektiv mit zugeordneten Drähten einer Längsdrahtschar verschweißt, daß gleichzeitig zwei Gitterbahnen entstehen, wobei die Längsdrähte der einen Gitterbann in den Längsdrahtlücken der anderen Gitterbahn liegen (vgl. DE-OS 26 22 167).

Die vorliegende Erfindung zielt darauf ab, eine Gitterschweißmaschine der einleitend angegebenen Gattung so auszubilden, daß sie auf einfache und betriebssichere Art das Herstellen von geschweißten Gittern ermöglicht, bei welchen einander an der Längsdrahtschar jeweils zwei Querdrähte gegenüberliegen, um so das Gitter zu versteifen oder bei Verwendung des Gitters für die Bewehrung von Beton die Verankerung der Bewehrung im Beton zu verbessern.

Diese Aufgabe wird erfindungsgemäß dadurch gelöst, daß die beiden in einer Ebene senkrecht zur Längsdrahtbahn liegenden Reihen von Elektroden im Schweißtakt zuerst nach oben bzw. nach unten von der Längsdrahtbahn wegbewegbar sind, um ein gleichzeitiges Zubringen von Querdrähten auf beiden Seiten der Längsdrahtschar zu ermöglichen, daß sodann jeweils zwei Querdrähte mittels ihrer Zubringer in einer Ebene senkrecht zur Längsdrahtbahn liegenden gleichzeitig in die/Schweißlagen Zwischen den beiden Reihen von Elektroden transportierbar sind, um die Querdrähte mittels der Elektroden an die zwischen ihnen befindliche Längsdrahtschar anlegen zu können, und daß schließlich eine Reihe von Elektroden unter Abstützung derselben als Widerlager stillsetzbar ist, wogegen die andere Reihe von Elektroden unter Schweißdruck setzbar ist, so daß durch den zwischen jedem Elektrodenpaar in Serie über die Kreuzungspunkte jeweils eines Längsdrahtes mit zwei anliegenden Querdrähten fließenden Schweißstrom jeder Längsdraht mit den beiden anliegenden Querdrähten gleichzeitig verschweißt wird.

Bei einer bevorzugten Ausführungsform der Erfindung, bei welcher die Elektroden der beiden Reihen paarweise mittels je eines die Längsdrahtbahn durchsetzenden Verbindungsstückes mechanisch zu einer Einheit zusammengefaßt sind, sind erfindungsgemäß in den Stromzuführungen zu den beiden Elektroden flexible Strombänder eingefügt.

Eine andere Ausführungsform der Erfindung zeichnet sich dadurch aus, daß die Elektroden der einen Reihe an einem gemeinsamen Elektrodenbalken befestigt sind, der mechanisch, z.B. mittels eines Exzenters oder Nockentriebes, bezüglich der Längsdrahtbahn im Arbeitstakt in eine feste Widerlagerposition verstellbar ist, und daß den Elektroden der anderen Reihe Hydraulikzylinder zugeordnet sind, die ebenfalls bezüglich der Längsdrahtbahn verstellbar und mit dem Schweißdruck beaufschlagbar sind.

Erfindungsgemäß kann ferner vorgesehen sein, daß der Querdrantzubringer für die oberen Querdrähte jeden Querdraht unter Schwerkraftwirkung in die Schweißlage fördert, wogegen der Querdrahtzubringer für die unteren Querdrähte gabelförmige Zubringerelemente aufweist, die mittels der Gabel jeweils einen unteren Querdraht aufnehmen und auf einem vorgeschriebenen Zubringerweg in die Schweißlage anheben.

Weitere Merkmale der Erfindung gehen aus der nachfolgenden Beschreibung eines Ausführungsbeispieles an Hand der Zeichnungen hervor.

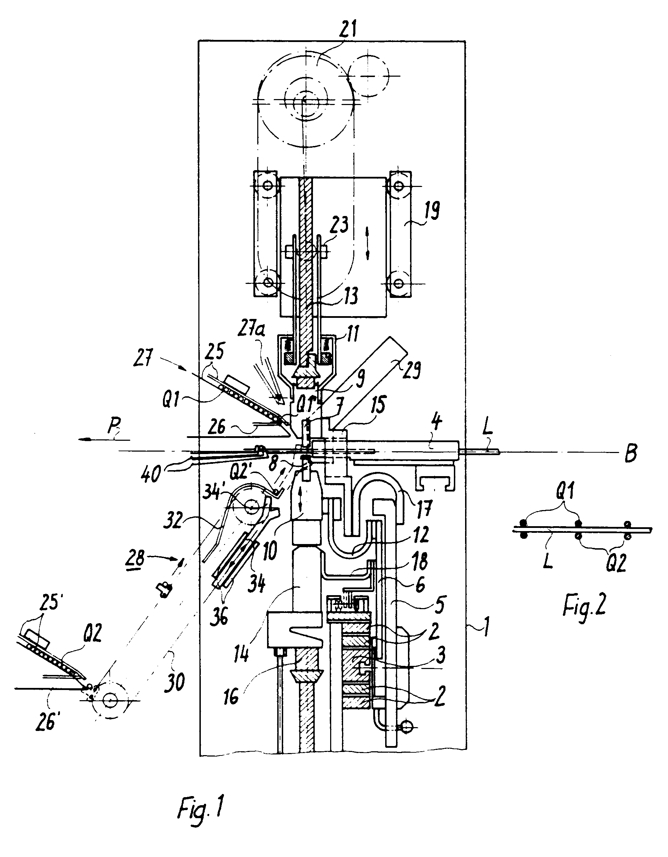

Fig. 1 zeigt eine Seitenansicht einer erfindungsgemäßen Schweißmaschine, mit welcher, vorzugsweise aus vorher abgelängten Längs- und Querdrähten, Gittermatten der in Fig. 2 in Seitenansicht dargestellten Art hergestellt werden können.

Die dargestellte erfindungsgemäße Schweißmaschine hat im wesentlichen folgenden Aufbau:

Vier quer zur Längsdraht-Vorschubrichtung P angeordnete Stromschienen 2 sind an einem Querbalken 3 des nur schematisch angedeuteten Maschinengestells 1 abgestützt und gegeneinander und gegen das Maschinengestell elektrisch isoliert. Die Stromschienen 2 sind mit zumindest einem, vorzugsweise aber mit mehreren nicht dargestellten Schweißtransformatoren verbunden. Längs der Stromschienen 2 sind Paare von Stromabnehmern 5, 6 verschiebbar angeordnet, die mit je einer Stromschiene 2 Kontakt geben und mit beiderseits der Längsdrahtbahn B-B in Querreihen angeordneten Elektroden 7, 8 in Verbindung stehen.

Die oberhalb der Längsdrahtbahn B-B, liegenden Elektroden 7 sitzen in Elektrodenhaltern 9, die durch Klemmelemente 11 an einem Elektrodenbalken 13 festgehalten sind. Jeder Elektrodenhalter 9 ist über ein die Längsdrahtbahn B-B durchsetzendes starres Verbindungsstück 15 mit einem flexiblen Stromband 17 verbunden, das am zugeordneten Stromabnehmer 5 befestigt ist.

Die unterhalb der Längsdrahtbahn liegenden Elektroden 8 sitzen in Elektrodenhaltern 10, an denen je ein flexibles Stromband 12 des zugeordneten Stromabnehmers 6 befestigt ist. Jeder Elektrodenhalter 10 wird auf seiner Unterseite von einem vertikalen Hydraulikzylinder 14 beaufschlagt, der nach unten auf einer gestellfesten Gleitschiene 16 fest abgestützt ist.

Die Hydraulikzylinder 14 stehen mit nicht dargestellten Hydraulikventilen in Verbindung, welche diese Zylinder im Arbeitstakt der Schweißmaschine steuern. In der eingefahrenen Position jedes Hydraulikzylinders 14 ist der zugehörige untere Elektrodenhalter 10 entsprechend abgesenkt, um die Zuführung eines unteren Querdrahtes Q2 zu ermöglichen. Durch Steuerung der Hydraulikzylinder 14 beim Ausfahren wird der Schweißdruck entsprechend den Durchmessern der zu verschweißenden Drähte eingestellt.

Der obere Elektrodenbalken 13 ist in einer vertikalen Rollenführung 19 geführt und wird mittels eines Exzenterantriebes 21 im Arbeitstakt der Schweißmaschine in entsprechende Hubbewegungen versetzt, um die oberen Elektrodenhalter 9 mit den zugehörigen Schweißelektroden 7 jeweils so anzuheben, daß in der obersten Position der Elektroden 7 ein oberer Querdraht Q1 ungehindert der Schweißlinie zugeführt werden kann. In der tiefsten Position des Elektrodenbalkens 13 und der Elektroden 7 ist die Lage der Längsdrähte L und der Querdrähte Q1, Q2 zum gegenseitigen gemeinsamen Verschweißen genau definiert. Die oberen Elektroden 7 wirken dann als Widerlager und nehmen den Schweißdruck auf, der von den unteren Elektroden 8 auf die Kreuzungspunkte jeweils eines Längsdrahtes L mit zwei Querdrähten Q1, Q2 aufgebracht wird.

Zur Grundeinstellung der oberen Elektrodenhalter 9 kann der obere Elektrodenbalken 13 mittels einer Exzenteranstelleinrichtung 23 in der Höhe verstellt werden. Zugleich mit dem Anheben der oberen Elektroden 7 werden die unteren Elektroden 6 mittels der Hydraulikzylinder 14 in einem vorbestimmten Ausmaß abgesenkt, um eine ausreichende Elektrodenspaltöffnung zu erzielen.

Die Längsdrähte L werden, vorzugsweise entsprechend der gewünschten Länge der herzustellenden Gittermatten abgelängt, über parallele Längsdrahtführungen 4, welche die horizontale Längsdrahtbahn B-B festlegen, zwischen den beiden Reihen von Elektroden 7, 8 zugeführt.

Das Zuführen der oberen und unteren Querdrähte Q1 und Q2 erfolgt aus Vorratsmagazinen, die im wesentlichen aus parallelen Leitblechen 25, 25' bestehen. Die Vorratsmagazine werden jeweils durch eine nur schematisch angedeutete Magazinsperre 26, 26' intermittierend geschlossen und geöffnet, so daß der Austritt jeweils nur eines Querdrahtes aus den Magazinen möglich ist. Die Leitbleche 25, 25' bilden einen Zuführungsspalt für die jeweiligen Querdrähte Q1, Q2. Beim oberen Querdrahtzubringer 27 ist dieser Führungsspalt direkt auf die Schweißlinie gerichtet und das Ende der Querdraht-Zuführungswege wird durch die Längsdrähte L und durch Querdrahtanschläge 29 festgelegt, so daß jeder obere Querdraht Q1 der Schwerkraft folgend sich bei seiner Zuführung bis zur Schweißlinie, d.h. bis zu den Querdrahtanschlägen 29 bewegt.

Beim unteren Querdrahtzubringer 28 ist der von den Leitblechen 25, 25' gebildete Zuführungsspalt auf angetriebene Förderketten 30 gerichtet, welche die Querdrähte Q2 aus dem Vorratsmagazin übernehmen und über Leitbleche 32 in eine Übernahmeposition Q2' fördern. In dieser Position Q2' werden die unteren Querdrähte Q2 von weiteren Zubringerelementen 34 erfaßt, in die Schweißlinie gebracht und dort gegen die Querdrähtanschläge 29 gedrückt. Jedes Zubringerelement 34 ist in einer Führung 36 mittels nicht dargestellter Antriebselemente in Richtung auf die Schweißlinie und zurück verschiebbar. Das vordere Ende der Zubringerelemente 34 ist gabelförmig ausgebildet, so daß jeder untere Querdraht Q2 während der Zuführbewegung sicher gehalten wird. Außerdem ist die der Schweißlinie abgewandte Gabelzinke 34' jedes angetriebenen Zubringerelementes 34 verlängert und ihre Innenfläche verläuft in der in Fig. 1 gestrichelt angedeuteten Endlage nahezu parallel zu den Querdrahtanschlägen 29, so daß jedes Zubringerelement 34 gegen Ende der Zuführbewegung eines unteren Querdrahtes Q2, falls die Schwerkraft für die Zuführung des zugeordneten oberen Querdrahtes Q1 nicht ausreicht, auch diesen in die Schweißlinie schieben und ebenfalls gegen die Querdrahtanschläge 29 drücken kann.

Die Hydraulikzylinder 14 heben während des Schweißhubes der unteren Elektroden 8 den unteren Querdraht Q2 aus der Gabel jedes Zubringerelementes 34 in die exakte Schweißlage an den Längsdrähten L. Nach Beendigung der Schweißvorganges fahren die Zubringerelemente 34 in ihre Ausgangslage zurück, geben die Vorschubbahn des Gitters frei, und das Gitter kann in bekannter Weise mittels Auszugshaken 40 um eine Querdrahtteilung vorgeschoben werden. In ebenfalls bekannter Weise kann durch geeignete Steuerung der Auszughaken 40 jede gewünschte Querdrahtteilung der Gittermatten eingestellt werden.

Eine Anderung der Längsdrahtteilung der Gittermatten erfolgt durch entsprechende Verschiebung der oberen und unteren Elektrodenhalter 9, 10 mit den zugehörigen Verbindungsstücken 15, den Strombändern 12, 17, den Stromabnehmern 5, 6 und den Hydraulikzylindern 14 unter gleichzeitiger Verschiebung der Längsdrahtzuführungen 4, und, falls erforderlich, auch der Querdrahtanschläge 29 und der Zubringerelemente 34 parallel zur Längsdrahtbahn B-B und senkrecht zur Längsdraht-Vorschubrichtung P.

Wie in Fig. 1 angedeutet, können auch mehrere obere Querdrahtzubringer 27 und 27a Verwendung finden, um beispielsweise das Zuführen von Querdrähten Q1 mit unterschiedlichen Durchmessern und unterschiedlichen Längen zu ermöglichen. Analog können auch für die unteren Querdrähte Q2 mehrere Zubringer vorgesehen werden.

Des weiteren ist es möglich, im Rahmen der Erfindung beispielsweise in die Übernahmeposition Q2' für den unteren Querdraht Q2 sowie beispielsweise in die Abgabepositionen Q1' der oberen Querdrahtzuführungen 27, 27a von zwei seitlich der Schweißmaschine angebrachten, nicht dargestellten Einschießgetrieben in bekannter Weise abgelängte Querdrähte Q1, Q2 zuzuführen und letztere mittels der Zubringerelemente 34 in die Schweißlinie zu fördern, gegen die Querdrahtanschläge 29 zu drücken und sodann eine Verschweißung mit den Längsdrähten L durchzuführen. Eine seitliche Zuführung der Querdrähte Q1, Q2 oberhalb und unterhalb der Längsdrahtbahn B-B mittels Einschießgetrieben direkt in die Schweißlinie ist im Rahmen der Erfindung ebenfalls möglich. In allen Fällen können die Einschießgetriebe sowohl nur auf einer Seite als auch auf beiden Seiten der Schweißmaschine oberhalb und/oder unterhalb der Längsdrahtbahn B-B angeordnet werden. Eine beidseitige Anordnung entweder nur oberhalb oder nur unterhalb der Längsdrahtbahn B-B wird beispielsweise in bekannter Weise mittels sogenannter Querdrahtweichen ermöglicht.

Das dargestellte Ausführungsbeispiel läßt im Rahmen der Patentansprüche verschiedene Abwandlungen zu. So können beispielsweise nach einem anderweitigen Vorschlag pneumatische Querdrahtzubringer und magnetisch wirkende Querdrahtanschläge vorgesehen werden. Ferner ist es möglich, einen der Querdrahtzubringer vorübergehend stillzusetzen, um normale Gitter mit einzelnen Querdrähten herzustellen. Überdies können durch gesteuertes zeitweiliges Stillsetzen des oberen oder unteren Querdrahtzubringers Gitter hergestellt werden, die alternierend doppelte Querdrähte und einzelne obere oder untere Querdrähte aufweisen. Die Längsdrähte können vorabgelängt oder kontinuierlich vom Ring zugeführt werden.

## Patentansprüche

1. Nach der elektrischen Widerstandsmethode arbeitende Gitterschweißmaschine (1) mit einer horizontalen Zuführungsbahn (B-B) für eine Schar paralleler Längsdrähte (L) und oberhalb sowie unterhalb derselben angeordneten Querdrahtzubringern (27, 28), welche anzuschweißende Querdrähte (Q1, Q2) orthogonal zu den Längsdrähten (L) in die Schweißlagen zwischen der Längsdrahtschar und beiderseits derselben angeordneten Reihen von aktiven Schweißelektroden (7, 8) bringen, dadurch gekennzeichnet, daß die beiden in einer Ebene senkrecht zur Längsdrahtbahn (B-B) liegenden Reihen von Elektroden (7, 8) im Schweißtakt zuerst nach oben bzw. nach unten von der Längsdrahtbahn (B-B) wegbewegbar sind, um ein gleichzeitiges Zubringen von Querdrähten (Q1, Q2) auf beiden Seiten der Längsdrahtschar (L) zu ermöglichen, daß sodann jeweils zwei Querdrähte (Q1, Q2) mittels ihrer Zubringer (27, 28) gleichzeitig in die in einer Ebene senkrecht zur Längsdrahtbahn (B-B) liegenden Schweißlagen zwischen den beiden Reihen von Elektroden (7, 8) transportierbar sind, um die Querdrähte mittels der Elektroden an die zwischen ihnen befindliche Längsdrahtschar anlegen zu können, und daß schließlich eine Reihe von Elektroden (7) unter Abstützung derselben als Widerlager stillsetzbar ist, wogegen die andere Reihe von Elektroden (8) unter Schweißdruck setzbar ist, so daß durch den zwischen jedem Elektrodenpaar (7, 8) in Serie über die Kreuzungspunkte jeweils eines Längsdrahtes (L) mit zwei anliegenden Querdrähten (Q1, Q2) fließenden Schweißstrom jeder Längsdraht mit den beiden anliegenden Querdrähten gleichzeitig verschweißt wird.

2. Gitterschweißmaschine nach Anspruch 1, bei welcher die Elektroden der beiden Reihen paarweise mittels je eines die Längsdrahtbahn durchsetzenden Verbindungsstückes mechanisch zu einer Einheit zusammengefaßt sind, dadurch gekennzeichnet, daß in den Stromzuführungen (9, 15, 17, 5 bzw. 10, 12, 6) zu den beiden Elektroden (7, 8) flexible Strombänder (17 bzw. 12) eingefügt sind.

3. Gitterschweißmaschine nach Anspruch 1, dadurch gekennzeichnet, daß die Elektroden (7) der einen Reihe an einem gemeinsamen Elektrodenbalken (13) befestigt sind, der mechanisch, z.B. mittels eines Exzenters (21) oder Nockentrieben, bezüglich der Längsdrahtbahn (B-B) im Arbeitstakt in eine feste Widerlagerposition verstellbar ist, und daß den Elektroden (8) der anderen Reihe Hydraulikzylinder (14) zugeordnet sind, die ebenfalls bezüglich der Längsdrahtbahn (B-B) verstellbar und mit dem Schweißdruck beaufschlagbar sind.

4. Gitterschweißmaschine nach Anspruch 3, dadurch gekennzeichnet, daß die Elektrodenpaare (7, 8) samt ihren Stromzuführungen (9, 15, 17, 5 bzw. 10, 12, 6) und den Hydraulikzylindern (14) längs transformatorisch gespeister Stromschienen (2) bzw. längs einer Gleitschiene (16) querverstellbar angeordnet sind.

5. Gitterschweißmaschine nach Anspruch 3 oder 4, dadurch gekennzeichnet, daß zum Einstellen der der Längsdrahtbahn (B-B) am nächsten liegenden Position des Elektrodenbalkens (13) eine Einstellvorrichtung (23) vorgesehen ist.

6. Gitterschweißmaschine nach einem der Ansprüche 1 bis 4, dadurch gekennzeichnet, daß die Querdrahtzubringer (27, 28) auf der Auslaufseite des Gitters an der Schweißmaschine angeordnet sind und daß sich auf der Zulaufseite der Längsdrähte (L) die Schweißlinien für die Querdrähte (Q1, Q2) definierende Querdrahtanschlage (29) befinden.

7. Gitterschweißmaschine nach Anspruch 6, dadurch gekennzeichnet, daß die Längsdrahtbahn (B-B) durchsetzende gemeinsame Anschläge (29) für die oberen und unteren Querdrähte (Q1, Q2) vorgesehen sind.

8. Gitterschweißmaschine nach einem der vorhergehenden Ansprüche, dadurch gekennzeichnet, daß der Querdrahtzubringer (27) für die oberen Querdrähte (Q1) jeden Querdraht unter Schwerkraftwirkung in die Schweißlage fördert, wogegen der Querdrahtzubringer (28) für die unteren Querdrähte (Q2) gabelförmige Zubringerelemente (34) aufweist, die mittels der Gabel jeweils einen unteren Querdraht (Q2) aufnehmen und auf einem vorgeschriebenen Zubringerweg in die Schweißlage anheben.

9. Gitterschweißmaschine nach Anspruch 8, dadurch gekennzeichnet, daß die der Schweißlinie abgekehrte Gabelzinke (34') des Zubringerelementes (34) so verlängert ist, daß sie in ihrer Endlage auch den jeweils gleichzeitig mit einem unteren Querdraht (Q2) zugeführten oberen Querdraht (Q1) gegen die Querdrahtanschläge (29) drückt.

## Claims

1. Grid welding machine (1) operating according to the electrical resistance principle with a horizontal feed path (B-B) for a bunch of parallel longitudinal wires (L) and transverse wire feeders (27, 28) disposed above and below the same, which bring transverse wires (Q1, Q2), which are to be attached by welding, perpendicularly to the longitudinal wires (L) into the weld positions between the bunch of longitudinal wires and rows of active welding electrodes (7, 8) disposed on both sides thereof, characterized in that the two rows of electrodes (7, 8), which are located in a plane perpendicular to the longitudinal wire path (B-B), are first movable upwardly or downwardly away from the longitudinal wire path (B-B) during the welding cycle in order to allow simultaneous feed of transverse wires (Q1, Q2) on both sides of the longitudinal wire bunch, in that then two transverse wires (Q1, Q2) each are simultaneously transportable into the weld positions between the two rows of electrodes (7, 8) by means of their wire feeders (27, 28), so as to be able to lay, by means of the electrodes, the transverse wires against the longitudinal wire bunch located between them, and in that finally one row of electrodes (7) can be immobilized by supporting them to form an abutment, while welding pressure can be applied to the other row of electrodes (8), so that each longitudinal wire is simultaneously welded together with the two abutting transverse wires by means of the welding current flowing between each pair of electrodes (7, 8) in series via the intersecting point between one longitudinal wire (L) and two abutting transverse wires (Q1, Q2).

2. Grid welding machine in accordance with claim 1, in which the electrodes of the two rows are mechanically combined in pairs into a unit by means of a connecting piece extending through the longitudinal wire path, characterized in that flexible copper braids (17 or 12) have been inserted in the power supplies (9, 15, 17, 5 or 10, 12, 6) of the two electrodes (7,8).

3. Grid welding machine in accordance with claim 1, characterized in that the electrodes (7) of the one row are attached to a common electrode bar (13) which can, during the work cycle, be mechanically displaced in relation to the longitudinal wire path (B-B), for example by an eccentric (21) or a cam drive, into a rigid abutment position, and in that hydraulic cylinders (14) are assigned to the electrodes (8) of the other row, which can also displaced in relation to the longitudinal wire path (B-B) and charged with welding pressure.

4. Grid welding machine in accordance with claim 3, characterized in that pairs of electrodes (7, 8), including their power supplies (9, 15, 17, 5 or 10, 12, 6) and the hydraulic cylinders (14), are disposed transversely adjustable along conductor rails (2) fed by a transformer, or along a sliding contact (16).

5. Grid welding machine in accordance with claim 3 or 4, characterized in that adjusting means (23) are provided for setting the position of the electrode bar (13) located closest to the longitudinal wire path (B-B).

6. Grid welding machine in accordance with one of claims 1 to 4, characterized in that the transverse wire feeders (27, 28) are disposed on the welding machine on the output side of the grid, and in that transverse wire stops (29) defining the weld lines for the transverse wires (Q1, Q2) are disposed on the feed side of the longitudinal wires (L).

7. Grid welding machine in accordance with claim 6, characterized in that common stops (29) for the upper and lower transverse wires (Q1, Q2), extending through the longitudinal wire path (B-B), are provided.

8. Grid welding machine in accordance with one of the preceding claims, characterized in that the transverse wire feeder (27) for the upper transverse wires (Q1) brings each transverse wire into the weld position by means of gravity, while the transverse wire feeder (28) for the lower transverse wires (Q2) has fork-like feed elements (34) which, by means of the fork, each take up a lower transverse wire (Q2) and lift it into the weld position along a prescribed feed path.

9. Grid welding machine in accordance with claim 8, characterized in that the tine (34') of the feed element (34) facing away from the weld line has been lengthened in such a way that in its end position it also presses, simultaneously with a lower transverse wire (Q2), a fed in upper transverse wire (Q1) against the transverse wire stops (29).

## Revendications

1. Soudeuse (1) pour la fabrication de grilles fonctionnant selon le principe de la résistance électrique comportant une voie d'amenée horizontale (B-B.) pour un groupe de fils longitudinaux parallèles (L) et des dispositifs d'amenée de fils transversaux (27, 28) installés au-dessus et en-dessous de ce groupe, qui amènent les fils transversaux à souder (Q1, Q2) orthogonalement par rapport aux fils longitudinaux (L) dans les positions de soudage entre le groupe de fils longitudinaux et des séries d'électrodes de soudage actives (7, 8) disposées de chaque côté de celui-ci, caractérisée en ce que, dans le cycle de soudage, les deux séries d'électrodes (7, 8) situées dans un plan perpendiculaire à la voie (B-B) des fils longitudinaux peuvent tout d'abord être écartés vers le haut ou vers le bas de la voie des fils longitudinaux (B-B) pour permettre une amenée simultanée des fils transversaux (Q1, Q2) des deux côtés du groupe de fils longitudinaux (L), en ce qu'ensuite deux fils transversaux (Q1, Q2) peuvent chaque fois être transportés au moyen de leurs dispositifs d'amenée (27, 28) simultanément vers les positions de soudage entre les deux séries d'électrodes (7, 8), pour appliquer les fils transversaux au moyen des électrodes sur le groupe de fils longitudinaux situé entre eux, et en ce que, pour finir, une série d'électrodes (7) peut être immobilisée contre les fils à titre de butée d'appui, tandis que l'autre série d'électrodes (8) peut être mise sous pression de soudage, de sorte que sous l'effet du courant de soudage passant entre les électrodes (7, 8) de chaque paire, en série via les points de croisement chaque fois d'un fil longitudinal (L) avec deux fils transversaux adjacents (Q1, Q2), chaque fil longitudinal est soudé simultanément aux deux fils transversaux adjacents.

2. Soudeuse pour la fabrication de grilles selon la revendication 1, dans laquelle les électrodes des deux séries sont groupées mécaniquement par paires au moyen chaque fois d'un élément de liaison traversant la voie des fils longitudinaux pour former une seule unité, caractérisée en ce que dans les amenées de courant (9, 15, 17,5 et 10, 2, 6) aux deux électrodes (7, 8) sont insérées des bandes flexibles de connexion (17 ou 12).

3. Soudeuse pour la fabrication de grilles selon la revendication 1, caractérisée en ce que les électrodes (7) d'une série sont fixées sur une poutre à électrodes commune (13) qui peut être déplacée, mécaniquement, par exemple au moyen d'un excentrique (21) ou d'un entraînement à came, par rapport à la voie des fils longitudinaux (B-B), en synchronisme vers une position de butée fixe, et en ce qu'aux électrodes (8) de l'autre série sont affectés des vérins hydrauliques (14) qui peuvent également être déplacés par rapport à la voie des fils longitudinaux (B-B) et être alimentés de la pression de soudage.

4. Soudeuse pour la fabrication de grilles selon la revendication 3, caractérisée en ce que les paires d'électrodes (7, 8), y compris leurs amenées de courant (9, 15, 17, 5 et 10, 12, 6) et les vérins hydrauliques (14), sont montées déplaçables respectivement le long de rails conducteurs de courant alimentés par transformateurs (2) et le long d'une glissière (16).

5. Soudeuse pour la fabrication de grilles selon la revendication 3 ou 4, caractérisée en ce qu'un dispositif de réglage (23) est prévu pour la mise au point de la position de la poutre à électrodes (13) la plus proche de la voie des fils longitudinaux (B-B).

6. Soudeuse pour la fabrication de grilles selon l'une des revendications 1 à 4, caractérisée en ce que les dispositifs d'amenée de fils transversaux (27, 28) sont installés sur la soudeuse du côté sortie de la grille et en ce que des butées pour fils transversaux (29) définissant les lignes de soudage pour les fils transversaux (Q1, Q2) sont situées du côté d'arrivée des fils longitudinaux (L).

7. Soudeuse pour la fabrication de grilles selon la revendication 6, caractérisée en ce que des butées communes (29) croisant la voie des fils longitudinaux (B-B) sont prévues pour les fils transversaux (Q1, Q2) supérieurs et inférieurs.

8. Soudeuse pour la fabrication de grilles selon l'une des revendications précédentes, caractérisée en ce que le dispositif d'amenée de fils transversaux (27) pour les fils transversaux supérieurs (Q1) amène chaque fil transversal sous l'effet de la gravité dans la position de soudage, tandis que le dispositif d'amenée de fils transversaux (28) pour les fils transversaux inférieurs (Q2) comporte des éléments d'amenée (34) en forme de fourche qui reçoivent chaque fois un fil transversal inférieur (Q2) au moyen de la fourche et l'élément sur une distance d'amenée prescrite dans la position de soudage.

9. Soudeuse pour la fabrication de grilles selon la revendication 8, caractérisée en ce que la dent de fourche (34') de l'élément d'amenée (34) opposée à la ligne de soudage est prolongée de façon à presser dans sa position d'extrémité, également le fil transversal supérieur (Q1) amené chaque fois en même temps qu'un fil transversal inférieur (Q2), contre les butées pour fils transversaux (29).
